# EUROPÄISCHE PATENTANMELDUNG

(11) **EP 4 778 651 A1**
(43) Veröffentlichungstag der Anmeldung: **22.07.2026**
(21) Anmeldenummer: 25152737.0
(22) Anmeldetag: 20.01.2025
(51) Int. Cl.: B22F 1/105, B22F 1/12, B22F 5/08, B33Y 50/00, B33Y 70/00, B33Y 80/00, F16H 55/06, F16H 55/17, B22F 10/80

(54) **VERSCHLEISSARME VERZAHNUNGSANORDNUNG ZUR LASTÜBERTRAGUNG**

(71) Anmelder: Flender GmbH, 46395 Bocholt (DE)
(72) Erfinder: DINTER, Ralf Martin, 46395 Bocholt (DE)
(74) Vertreter: Michalski Hüttermann & Partner mbB

(57) **Zusammenfassung**

Es ist eine Verzahnungsanordnung zur Lastübertragung vorgesehen mit einem ersten Zahn (22) zum Einleiten einer Last und einem an dem ersten Zahn (22) an einer Abstützfläche (24) abstützbaren zweiten Zahn zum Ausleiten der Last, wobei der erste Zahn (22) und/oder der zweite Zahn aus einem ölfreien, selbstschmierenden Sintermaterial (26) hergestellt ist, wobei das Sintermaterial (26) eine offenporige Metallmatrix aufweist und in der Metallmatrix Festschmierstoffpartikel und Kohlenstoffpartikel dispergiert sind. Durch die mit Hilfe des Kohlenstoffs während des Sinterns unverbrauchten Festschmierstoffpartikel in der hart gesinterten Metallmatrix des Sintermaterials (26) kann eine hohen Belastungen standhaltende ölfreie und selbstschmierende Feststoffschmierung erreicht werden, so dass eine verschleißarm geschmierte Verzahnungsanordnung ermöglicht ist.

## Beschreibung

Die Erfindung betrifft eine Verzahnungsanordnung, mit dessen Hilfe eine statische und/oder dynamische Lastübertragung erfolgen kann, sowie ein derartiges Getriebe, eine derartige Zahnkupplung und derartige Verwendungen. Die Erfindung betrifft zudem ein Verfahren zur Herstellung einer derartigen Verzahnungsanordnung sowie ein Datenagglomerat zur virtuellen Abbildung einer derartigen Verzahnungsanordnung zum Zwecke der additiven Fertigung und/oder Simulation.

WO 2015/135832 A1 zeigt eine Zahnkupplung mit lastübertragenden Verzahnungen, bei der die jeweilige Verzahnung eine Innenverzahnung und eine mit der Innverzahnung zur Übertragung der Last verzahnte Außenverzahnung aufweist.

Es ist bekannt Zahnkupplungen durch Schmieröl oder Schmierfett zu schmieren.

Es ist bekannt flüssigen Schmierstoffen, beispielsweise Schmieröl, partikelförmige Festschmierstoffe, beispielsweise Graphit oder MoS₂, beizumischen, um die Schmiereigenschaften zu verbessern und die Reibung zwischen den geschmierten Reibungspartner zu reduzieren.

Aus Sprogies, N.; Lohner, T.; Stahl, K. "Improved Operating Behavior of Self-Lubricating Rolling-Sliding Contacts under High Load with Oil-Impregnated Porous Sinter Material" Lubricants 2024, 12, 259. https://doi.org/10.3390/ lubricants12070259 ist es bekannt, dass mit einer Relativgeschwindigkeit von 8 m/s aufeinander abrollende Scheiben aus einem mit Schmieröl imprägnierten einsatzgehärteten P-FL-05M1 Sintermaterial, das einen Zusatz von 2% Molybdänsulfid (MoS₂) und Wolframsulfid (WS₂) als Festschmierstoffzusätze in der Pulvermischung aufweist, bei einer Hertzschen Pressung von 1 043 N/mm² und 1 200 N/mm² niedrige Reibungskoeffizienten erreichen.

Aus De Lima, G. A.; Klein, A. N.; Furlan, K. P. "Controlling the Solid-State Reaction in Fe-MoS2 Self-Lubricating Composites for Optimized Tribological Properties" Lubricants 2022, 10, 142. https://doi.org/10.3390/lubricants10070142 ist ein durch Pulvermetallurgie und Niedrigtemperatursintern hergestellter selbstschmierender Verbundwerkstoff auf Eisenbasis bekannt, der MoS₂ und Graphit enthält und einen niedrigen Reibungskoeffizienten und eine geringe Verschleißrate erreicht.

Es besteht ein ständiges Bedürfnis einen Verschleiß in einer Verzahnungsanordnung zu reduzieren.

Es ist die Aufgabe der Erfindung Maßnahmen aufzuzeigen, die eine verschleißarme Verzahnungsanordnung ermöglichen.

Die Lösung der Aufgabe erfolgt durch ein Verzahnungsanordnung mit den Merkmalen des Anspruchs 1, eine Verwendung mit den Merkmalen des Anspruchs 8, ein Verfahren mit den Merkmalen des Anspruchs 11, ein Getriebe mit den Merkmalen des Anspruch 12, eine Zahnkupplung mit den Merkmalen des Anspruchs 14 sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Verzahnungsanordnung zur Lastübertragung, mit einem ersten Zahn zum Einleiten einer Last und einem an dem ersten Zahn an einer Abstützfläche abstützbaren zweiten Zahn zum Ausleiten der Last, wobei der erste Zahn und/oder der zweite Zahn aus einem ölfreien, selbstschmierenden Sintermaterial hergestellt ist, wobei das Sintermaterial eine offenporige Metallmatrix aufweist und in der Metallmatrix Festschmierstoffpartikel und Kohlenstoffpartikel dispergiert sind. Insbesondere ist der erste Zahn aus dem Sintermaterial und der zweite Zahn aus einem Stahl hergestellt oder der zweite Zahn ist aus dem Sintermaterial und der erste Zahn aus einem Stahl hergestellt.

Es wurde erkannt, dass es bei einer Verzahnungsanordnung möglich ist, anstelle einer Öl- oder Fett-Schmierung eine Feststoffschmierung vorzusehen, indem für zumindest einen der Verzahnungspartner ein Sintermaterial mit einer offenporigen Metallmatrix verwendet wird, in der Festschmierstoffpartikel und Kohlenstoffpartikel dispergiert sind. Eigentlich ist zu erwarten, dass bei einer typischen Sintertemperatur von 1 150°C sich die in der Metallmatrix des Sintermaterials dispergierten Festschmierstoffpartikel zersetzen und/oder mit den Metallpartikeln der Metallmatrix eine Verbindung eingehen, aufgrund dessen die Festschmierstoffpartikel so stark in der Metallmatrix eingebunden sind, dass die Festschmierstoffpartikel ihrer reibungsreduzierenden Funktion nicht mehr nachkommen können. Bei dem Festschmierstoff Molybdändisulfid (MoS₂) würde sich bei einer aus Eisen (Fe) bestehenden Metallmatrix bereits ab 775°C FeS bilden, wodurch nach dem Sintern kein MoS₂ als Festschmierstoff übrig bleiben würde. Es wurde aber erkannt, dass durch den Kohlenstoff in dem Grünkörper der Kohlenstoff beim Sintern schneller mit der Metallmatrix interagiert als der Festschmierstoff MoS₂, so dass ein Verbrauch von MoS₂ während des Sinterns durch die Präsenz des Kohlenstoffs vermieden oder zumindest reduziert werden kann. Dies ermöglicht es nach dem Sintern eine offenporige Metallmatrix vorliegen zu haben, über dessen offene Poren der in der Metallmatrix verbliebene Festschmierstoff an die Oberfläche gelangen kann, um eine reibungsreduzierende Schmierwirkung zu entfalten. Falls der in einer offenen Pore enthaltene Kohlenstoff beim Sintern abbrennen sollte, führt dies dazu, dass unterhalb des abgebrannten Kohlenstoffs vorgesehener Festschmierstoff leichter an die Oberfläche gelangen kann. Wenn in der Pore zwischen dem Festschmierstoff und der Oberfläche nicht abgebrannter Kohlenstoff, insbesondere Graphit, verbleiben sollte, kann der Kohlenstoff im laufenden Betrieb aus der Pore herausgedrückt werden und ebenfalls als ein Festschmierstoff eine reibungsreduzierende Schmierwirkung entfalten. Zudem ist es möglich über die Sintertemperatur das chemische Verhalten des Kohlenstoffs in der Metallmatrix zu beeinflussen, um einerseits eine ausreichende Festigkeit und Härte für das Sintermaterial sicherzustellen und andererseits über den in der Metallmatrix ausreichend beweglichen Kohlenstoff und beim Sintern nicht verbrauchten Festschmierstoff eine ausreichende Selbstschmierung ohne zusätzliches Schmieröl oder Schmierfett zu erreichen. Überraschenderweise kann die Sintertemperatur hierzu in einem deutlich unterhalb üblicher Sintertemperaturen von 1 150°C vorgesehenen Temperaturbereich liegen, in dem ohne den Kohlenstoff ein Verbrauch des Festschmierstoffs eintreten würde, aber durch den Zusatz von ausreichend Kohlenstoff über die Sinterzeit ein Verbrauch des Festschmierstoffs in der Metallmatrix ausreichend gering gehalten werden kann, um ein festes selbstschmierendes Sintermaterial zu erzeugen.

Ebenso wurde erkannt, dass in einer Verzahnungsanordnung in der Regel Anwendungsfälle auftreten, in denen die so erreichte Festigkeit des Sintermaterials für den einen Verzahnungspartner bei einer lastübertragenden Abstützung an einem, beispielswiese aus Stahl hergestellten, anderen Verzahnungspartner auch bei dynamischen Lasten eine verschleißarme Werkstoffpaarung vorliegt. Es wird davon ausgegangen, dass der aus dem Sintermaterial hergestellte Zahn sehr hohe Lasten ertragen kann und durch seinen Selbstschmiereffekt mit Hilfe der Festschmierstoffpartikel und gegebenenfalls mit Hilfe der Kohlenstoffpartikel eine wartungsfreie Schmierung ermöglicht, aber ein eher sprödes Werkstoffverhalten aufweist. Dagegen kann der, insbesondere aus einem Stahl-Werkstoff hergestellte, über die Abstützfläche zusammenwirkende Zahn des anderen Verzahnungspartners ein deutlich duktileres Werkstoffverhalten aufweisen. Dadurch ist der aus dem Stahl hergestellte Zahn in einem besonderen Ausmaß in der Lage Drehmomentstöße durch eine elastische Deformation abzufedern, während der aus dem Sintermaterial hergestellte Zahn die ölfreie und fettfreie Schmierung zwischen den Zähnen gewährleisten kann. Durch die in der Abstützfläche auftretende Flächenpressung kann der Festschmierstoff an der Oberfläche des Sintermaterial angepresst werden, wobei die in einer Verzahnungsanordnung zu erwartenden Flächenpressungen hoch genug sein sollten, dass der Festschmierstoff sich an den Unebenheiten der vorliegenden Oberflächenrauigkeiten festkrallen und/oder festklemmen kann und eine beispielsweise durch elastische Verformung verursachte Relativbewegung der aufeinander gepressten Abstützflächen der Zähne mit einem geringeren Reibungskoeffizienten leichter und verschleißärmer erfolgen kann. Wenn ein Festschmierstoffpartikel sich aus der Metallmatrix des Sintermaterials lösen sollte, ist es möglich dieses Festschmierstoffpartikel im Bereich der Abstützfläche wieder an das Sintermaterial anzupressen. Es ist aber auch möglich, dass das von dem Sintermaterial abgetrennte Festschmierstoffpartikel in der Abstützfläche des jeweils anderen Zahns angepresst wird und dadurch eine allmähliche Beschichtung des nicht aus dem Sintermaterial hergestellten Zahns herbeigeführt wird, so dass auch der andere Zahn zumindest bereichsweise eine reibungsreduzierende Oberfläche erhalten kann. Eine Abrasion des Sintermaterials kann dadurch sogar zu einem zusätzlichen reibungsreduzierenden Schmiereffekt durch den anpresste Festschmierstoff führen. Ebenso sind bei den zu erwartenden Betriebsbedingungen der Verzahnungsanordnung Kaltverschweißungen in Bereich der Abstützflächen der aneinander gepressten Zähne nicht zu erwarten. Durch die mit Hilfe des Kohlenstoffs während des Sinterns unverbrauchten Festschmierstoffpartikel in der hart gesinterten Metallmatrix des Sintermaterials kann eine hohen Belastungen standhaltende ölfreie und selbstschmierende Feststoffschmierung erreicht werden, so dass eine verschleißarm geschmierte Verzahnungsanordnung ermöglicht ist.

Die Verzahnungsanordnung stellt einen Verzahnungseingrifft zwischen zwei separat ausgeführten Verzahnungspartnern her, indem der mindestens eine erste Zahn des ersten Verzahnungspartner über eine Zahnflanke an die Zahnflanke des mindestens einen zweiten Zahns des zweiten Verzahnungspartners drückt, um eine Last zu übertragen beziehungsweise abzustützen. Bei der Verzahnungsanordnung können beispielsweise zwei Zahnräder eine Stirnradverzahnung ausbilden, eine Innenverzahnung in eine Außenverzahnung eingreifen oder ein Ritzel mit einer Zahnstange zusammenwirken. Der erste Verzahnungspartner und der zweite Verzahnungspartner können eine Relativbewegung zueinander ausführen, bei welcher der erste Zahn auf dem zweiten Zahn abwälzt und ein nachfolgender erster Zahn auf dem nachfolgenden zweiten abwälzt und so weiter. Es ist aber auch möglich, dass in der Verzahnungsanordnung die Verzahnungspartner relativ zueinander stillstehen und vorwiegend lediglich statische Lasten abstützen, wobei die statischen Lasten sich in ihrem Betrag ändern können, wodurch infolge elastischer Verformungen der Zähne unter der anliegenden Last geringfügig Relativbewegungen der angepressten Abstützflächen der Zähne auftreten können.

Der erste Zahn und der zweite Zahn können insbesondere auf einer Evolventenverzahnung beruhen, bei der gegebenenfalls eine Flankenkorrektur zur Abwandlung der Evolventenverzahnung vorgenommen wurde. Es sind aber auch andere Verzahnungsformen möglichen.

Die Abstützfläche ist ein Flächenbereich des ersten Zahns und/oder des zweiten Zahns, in dem ein Anpressen der Zähne bei der Lastübertragung stattfindet. In der Regel liegt die Abstützfläche ausschließlich in den Zahnflanken der Zähne vor. Wenn in der Verzahnungsanordnung nur genau eine Lastrichtung vorgesehen ist, ist es sogar möglich, dass nur eine Zahnflanke eines Zahns als Abstützfläche verwendet wird. Vorzugsweise ist entweder nur der mindestens eine erste Zahn oder nur bei der mindestens eine zweiten Zahn aus dem Sintermaterial hergestellt, so dass es möglich ist das Sintermaterial nur bei einem der Verzahnungspartner der Verzahnungsanordnung vorzusehen, wodurch der Herstellungsaufwand für die Verzahnungsanordnung gering gehalten werden kann.

Der Festschmierstoff der Festschmierstoffpartikel führt zu einem geringeren Reibungskoeffizienten zwischen dem ersten Zahn und dem zweiten Zahn im Bereich der Abstützfläche im Vergleich zu einem Reibungskoeffizienten an der selben Stelle, wenn der Festschmierstoff nicht vorhanden wäre. In der Regel weist der Festschmierstoff eine Schichtstruktur vergleichbar zu Graphit und/oder eine plattenförmige Struktur vergleichbar zu PTFE auf. Der Festschmierstoff kann beispielsweise mit Hilfe von Molybdän, insbesondere als MoS₂, Mo0₂ oder MoOs, gebildet sein, wobei auch andere Festschmierstoff möglich sind.

Der Kohlenstoff, der insbesondere als Graphit zugesetzt ist, wirkt sich positiv auf die Verzögerung der Reaktion von MoS₂ mit der, insbesondere auf Eisen basierenden, Metallmatrix aus. Die Zugabe von Kohlenstoff erhöht die Temperatur, bei der das gesamte MoS₂ verbraucht wird, um Fe- oder Fe-Mo-Sulfide zu bilden, die keine Festschmierstoffe sind. Darüber hinaus erhöht der Kohlenstoff -Zusatz die Härte der Metallmatrix, was ebenfalls zu dem guten tribologischen Verhalten beiträgt.

Das Sintermaterial kann aus einem gesinterten Grünkörper erzeugt werden, der aus einer Pulvermischung besteht, die Metallpartikel, Festschmierstoffpartikel und Kohlenstoffpartikel aufweist. Für gute Ergebnisse für das Sintermaterial kommt es bei der Pulvermischung insbesondere nicht nur auf die Mischungsverhältnisse (beispielsweise in Volumen-%) an, sondern auch auf die Partikelgröße. Insbesondere wird beim als Graphit zugesetzten Kohlenstoff von einer Wechselwirkung zwischen dem Graphittyp, dem Graphitgehalt und der Sintertemperatur ausgegangen. Gute Ergebnisse für das Sintermaterial können beispielswiese erreicht werden bei einer Pulvermischung mit 9 Volumen-% MoS₂ und 2,5 Volumen-% Graphit mit einer anfänglichen Partikelgröße der Graphitpartikel von 32 µm, gesintert bei 825°C, sowie bei einer Pulvermischung mit 9 Volumen-% MoS₂ und 2,5 Volumen-% Graphit mit einer anfänglichen Partikelgröße der Graphitpartikel von 5,9 µm, gesintert bei 850°C. Der Rest der Pulvermischung kann durch Fe gebildet sein, wobei Verunreinigungen der Pulvermischung in der Regel kleiner 1 Volumen-% betragen. Die so hergestellten Sintermaterialen können einen durchschnittlichen Reibungskoeffizienten von ca. 0,07 und eine durchschnittliche Verschleißrate von ca. 7 × 10⁻⁶ mm³ N⁻¹ m⁻¹ beziehungsweise ca. 5 × 10⁻⁶ mm³ N⁻¹ m⁻¹ aufweisen. Diese Sintermaterialen können ein hervorragendes tribologisches Verhalten sowohl in einer Stickstoffatmosphäre als auch in einer Luftatmosphäre zeigen.

Die Betriebsbedingungen in der Verzahnungsanordnung führen insbesondere zu einer, beispielsweise bei Drehmomentstößen auftretende, maximalen Flächenpressung pₘₐₓ in der Abstützfläche von 400 N/mm² ≤ pₘₐₓ ≤ 900 N/mm², insbesondere 500 N/mm² ≤ pₘₐₓ ≤ 700 N/mm², während vorzugsweise im regulären Normalbetrieb eine Flächenpressung p von 150 N/mm² ≤ p ≤ 400 N/mm², insbesondere p = 300 N/mm² ± 50 N/mm² vorherrscht. Infolge von Wärmeentwicklungen im Bereich der Verzahnungsanordnung ist bei den Betriebsbedingungen insbesondere von einer Temperatur T im Bereich der Abstützfläche von 20°C ≤ T ≤ 80°C, vorzugsweise 23°C ≤ T ≤ 50°C und besonders bevorzugt 25°C ≤ T ≤ 30°C.

Insbesondere ist vorgesehen, dass in einer Pulvermischung zur Herstellung eines Grünkörpers für das Sintermaterial bezogen auf das Gesamtvolumen die Festschmierstoffpartikel einen Volumenanteil V_{F} von 7,5% ≤ V_{F} ≤ 10,5%, insbesondere V_{F} = 9% ± 0,2% und/oder die Kohlenstoffpartikel einen Volumenanteil Vc von 1,5% ≤ V_{C} ≤ 7,5%, insbesondere 2,0% ≤ V_{C} ≤ 5,0% und vorzugsweise Vc = 2,5% ± 0,1% aufweisen. Bei einem derartigen Anteil an Festschmierstoffpartikel kann ein ausreichender Selbstschmiereffekt erreicht werden, während bei einem derartigen Anteil an Kohlenstoffpartikeln, insbesondere Graphitpartikeln, ein Verbrauch der Festschmierstoffpartikel beim Sintern vermieden und eine hohe Festigkeit der Metallmatrix, insbesondere Fe-Matrix, erreicht werden kann. Vorzugsweise ist vorgesehen, dass in einer Pulvermischung zur Herstellung eines Grünkörpers für das Sintermaterial die Kohlenstoffpartikel, insbesondere Graphitpartikel, eine mittlere Partikelgröße x von 4,5 µm ≤ x ≤ 40 µm und insbesondere 5,5 µm ≤ x ≤ 35 µm aufweisen. Bei einer derartigen Partikelgröße kann einerseits eine ausreichend hohe Kontaktfläche mit der Metallmatrix erreicht werden, um einen Verbrauch der Festschmierstoffpartikel beim Sintern durch eine chemische Reaktion mit der Metallmatrix zu blockieren, wobei gleichzeitig eine zu starke Aufkohlung und Versprödung der Metallmatrix vermieden werden kann.

Besonders bevorzugt ist das Sintermaterial bei einer Sintertemperatur T von 775°C ≤ T ≤ 1 000°C, insbesondere 800°C ≤ T ≤ 900°C und vorzugsweise 825°C ≤ T ≤ 850°C hergestellt. Die Sintertemperatur kann insbesondere je nach Volumenanteil des Kohlenstoffs und der Partikelgröße des Kohlenstoffs angepasst sein, um nach dem Sintern beim Sintermaterial im laufenden Betrieb einen geringen Reibungskoeffizienten und eine für den Anwendungsfall ausreichende Festigkeit zu erreichen. Insbesondere kann eine vergleichsweise niedrige Sintertemperatur von unter 1 000°C angewendet werden, die aber in der Regel höher ist als eine Temperatur, bei der ohne Kohlenstoffumgebung ein Verbrauch der Festschmierstoffpartikel beim Sintern stattfinden würde, als beispielsweise größer als 775°C bei MoS₂ als Festschmierstoff.

Insbesondere ist vorgesehen, dass die Festschmierstoffpartikel MoS₂ aufweisen oder ausschließlich aus MoS₂ bestehen. Alternativ kann auch MoO₂ oder MoOs vorgesehen sein. Zumindest für MoS₂ konnte die gute Eignung als Festschmierstoffpartikel in dem Sintermaterial bereits nachgewiesen werden.

Vorzugsweise ist vorgesehen, dass die Metallmatrix Eisen und/oder Eisenverbindungen und/oder Eisenlegierungen aufweist oder ausschließlich aus Eisen und/oder Eisenverbindungen und/oder Eisenlegierungen besteht. Zumindest für Eisen konnte die gute Eignung als Metallmatrix in dem Sintermaterial bereits nachgewiesen werden. Die Metallpartikel für die Metallmatrix können insbesondere Fe, C45, C60, 16MnCr5, 42CrMo5 und/oder 34CrNiMo6 aufweisen.

Besonders bevorzugt liegen die dispergierten Kohlenstoffpartikel als Graphit vor. In der Metallmatrix nicht fest gebundener Kohlenstoff kann dadurch als Graphit ebenfalls als Festschmierstoff wirken, der zumindest ergänzend zu dem Festschmierstoffpartikeln eine reibungsreduzierende Wirkung bereitstellen kann.

Ein weiterer Aspekt betrifft der Erfindung eine Verwendung einer Verzahnungsanordnung, die wie vorstehend beschrieben aus- und weitergebildet sein kann, bei einer maximalen Flächenpressung pₘₐₓ in der Abstützfläche von 400 N/mm² ≤ pₘₐₓ ≤ 900 N/mm², insbesondere 500 N/mm² ≤ pₘₐₓ ≤ 700 N/mm². Es ist zu erwarten, dass derartige maximale Flächenpressungen bei einer Verzahnungsanordnung nicht überschritten werden, und das eher spröde Sintermaterial derartigen Belastungen kurzzeitig standhalten kann, ohne zu versagen. Durch die mit Hilfe des Kohlenstoffs während des Sinterns unverbrauchten Festschmierstoffpartikel in der hart gesinterten Metallmatrix des Sintermaterials kann eine hohen Belastungen standhaltende ölfreie und selbstschmierende Feststoffschmierung erreicht werden, so dass eine verschleißarm geschmierte Verzahnungsanordnung ermöglicht ist.

Besonders bevorzugt herrscht im regulären Normalbetrieb in der Abstützfläche eine Flächenpressung p von 150 N/mm² ≤ p ≤ 400 N/mm², insbesondere p = 300 N/mm² ± 50 N/mm² vor. Es ist zu erwarten, dass das eher spröde Sintermaterial derartige Belastungen auch über einen längeren Zeitraum standhalten kann, ohne zu versagen.

Insbesondere liegt im regulären Normalbetrieb eine Temperatur T im Bereich der Abstützfläche von 20°C ≤ T ≤ 80°C, vorzugsweise 23°C ≤ T ≤ 50°C und besonders bevorzugt 25°C ≤ T ≤ 30°C vor. Es ist zu erwarten, dass eine derartige Betriebstemperatur keine thermische Schädigung des Sintermaterials verursacht und/oder thermisch getriebene Kriecheffekte signifikant vorantreibt.

Ein weiterer Aspekt der Erfindung betrifft ein Verfahren zur Herstellung einer Verzahnungsanordnung, die wie vorstehend beschrieben aus- und weitergebildet sein kann, bei dem eine Pulvermischung zur Herstellung eines Grünkörpers bereitgestellt wird, wobei die Pulvermischung Metallpartikel, Festschmierstoffpartikel und Kohlenstoffpartikel aufweist, der Grünkörper zur Ausbildung eines den ersten Zahn oder den zweiten Zahn aufweisenden Verzahnungspartners ausgeformt wird, und der Grünkörper bei einer Sintertemperatur T von 775°C ≤ T ≤ 1 000°C, insbesondere 800°C ≤ T ≤ 900°C und vorzugsweise 825°C ≤ T ≤ 850°C gesintert wird, um das Sintermaterial mit der offenporigen Metallmatrix, in der die Festschmierstoffpartikel und die Kohlenstoffpartikel dispergiert sind, auszubilden, wobei insbesondere nachfolgend der Verzahnungspartner ölfrei mit einem anderen Verzahnungspartner in einen Verzahnungseingriff gebracht wird. Der andere Verzahnungspartner ist vorzugsweise aus einem von dem Sintermaterial verschiedenen Material, insbesondere Stahl, hergestellt, das im Vergleich zu dem Sintermaterial duktiler ist. Das Verfahren kann insbesondere wie vorstehend anhand der Verzahnungsanordnung und der Verwendung der Verzahnungsanordnung erläutert aus- und weitergebildet sein. Durch die mit Hilfe des Kohlenstoffs während des Sinterns unverbrauchten Festschmierstoffpartikel in der hart gesinterten Metallmatrix des Sintermaterials kann eine hohen Belastungen standhaltende ölfreie und selbstschmierende Feststoffschmierung erreicht werden, so dass eine verschleißarm geschmierte Verzahnungsanordnung ermöglicht ist.

Der Sinterprozess wird insbesondere nur auf einen der Verzahnungspartner der Verzahnungsanordnung angewendet. Dabei der Verzahnungspartner direkt in der finalen Form gesintert werden. Ein zusätzliches Verfestigungsrollen kann dann die Tragfähigkeit erhöhen, wobei hierbei die Poren der Metallmatrix mit den Festschmierstoffpartikel nicht verschlossen und/oder offen gehalten werden sollen. Des Weiteren können die Verzahnungspartner auch als Rund-Sinterstahl hergestellt werden und mechanisch bearbeitet werden.

Ein weiterer Aspekt betrifft ein Getriebe, insbesondere für ein Schienenfahrzeug, mit einer Verzahnungsanordnung, die wie vorstehend beschrieben aus- und weitergebildet sein kann, zur Übertragung einer Getriebeleistung. Vorzugsweise ist die Verzahnungsanordnung Teil einer Stirnradverzahnung. Besonders bevorzugt ist die Verzahnungsanordnung Teil einer Planetenradverzahnung, wobei die Planetenradverzahnung ein Planetenrad eines Planetengetriebes und eine mit dem Planetenrad verzahntes Hohlrad ist. Durch die mit Hilfe des Kohlenstoffs während des Sinterns unverbrauchten Festschmierstoffpartikel in der hart gesinterten Metallmatrix des Sintermaterials kann eine hohen Belastungen standhaltende ölfreie und selbstschmierende Feststoffschmierung erreicht werden, so dass eine verschleißarm geschmierte Verzahnungsanordnung des Getriebes ermöglicht ist.

Ein weiterer Aspekt betrifft eine Zahnkupplung zum Kuppeln einer Eingangswelle mit einer Ausgangswelle, mit einer Innenverzahnung und einer an der Innenverzahnung abgestützten Außenverzahnung, wobei zwischen der Innenverzahnung und der Außenverzahnung eine Verzahnungsanordnung, die wie vorstehend beschrieben aus- und weitergebildet sein kann, ausgebildet ist. Die Zahnkupplung kann in einer industriellen Windkraftanlage vorgesehen sein. Die zugehörige Windkraftanlage kann für eine industrielle Stromerzeugung ausgestaltet sein und ist in der Regel insbesondere für eine Nennleistung von mindestens 2 MW, vorzugsweise mindestens 5 MW und besonders bevorzugt von mindestens 15 MW dimensioniert und insbesondere für den Offshore-Betrieb ausgelegt, was eine entsprechende Leistungsdichte in der Getriebeleistung und entsprechende Größenverhältnisse für die Komponenten der Windkraftanlage, insbesondere der Verzahnungsanordnung als Teil des Getriebes, impliziert. Vorzugsweise ist die Zahnkupplung im Antriebsstrang eines Schienenfahrzeugs, beispielsweise in Leistungsflussrichtung zwischen einem Antriebsmotor und/oder Getriebe einerseits und einem Antriebsrad andererseits vorgesehen, insbesondere um eine drehbare und vorzugsweise auch verkippbare drehmomentübertragende Anbindung des auf einer Schiene aufliegenden Antriebsrads zu einem höhenveränderlichen Waggon herbeizuführen. Im Vergleich zu einer relativ beweglichen Verzahnung in einem Getriebe ist in der Zahnkupplung mit besonders geringen Relativbewegungen im Bereich der Abstützflächen zu rechnen. Durch die mit Hilfe des Kohlenstoffs während des Sinterns unverbrauchten Festschmierstoffpartikel in der hart gesinterten Metallmatrix des Sintermaterials kann eine hohen Belastungen standhaltende ölfreie und selbstschmierende Feststoffschmierung erreicht werden, so dass eine verschleißarm geschmierte Verzahnungsanordnung der Zahnkupplung ermöglicht ist.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Verzahnungsanordnung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Verzahnungsanordnung, insbesondere durch 3D-Druck, und/oder bei einer Verarbeitung durch eine Datenverarbeitungseinrichtung zur Durchführung einer technischen Simulation eine Simulation der Funktionsweise der Verzahnungsanordnung, durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten

Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, wobei der Schutzbereich durch die Ansprüche bestimmt wird. Wenn ein Merkmal in den nur exemplarischen Zeichnungen und der zugehörigen Beschreibung in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann. Es zeigen:
Fig. 1: eine schematische Schnittansicht Doppelgelenkkupplung für ein Schienenfahrzeug,
Fig. 2: eine schematische perspektivische Ansicht eines Zahns einer Zahnkupplung der Doppelgelenkkupplung aus Fig. 1 und
Fig. 3: ein Diagramm mit Testergebnissen für verschieden ausgestaltete Sintermaterialen.

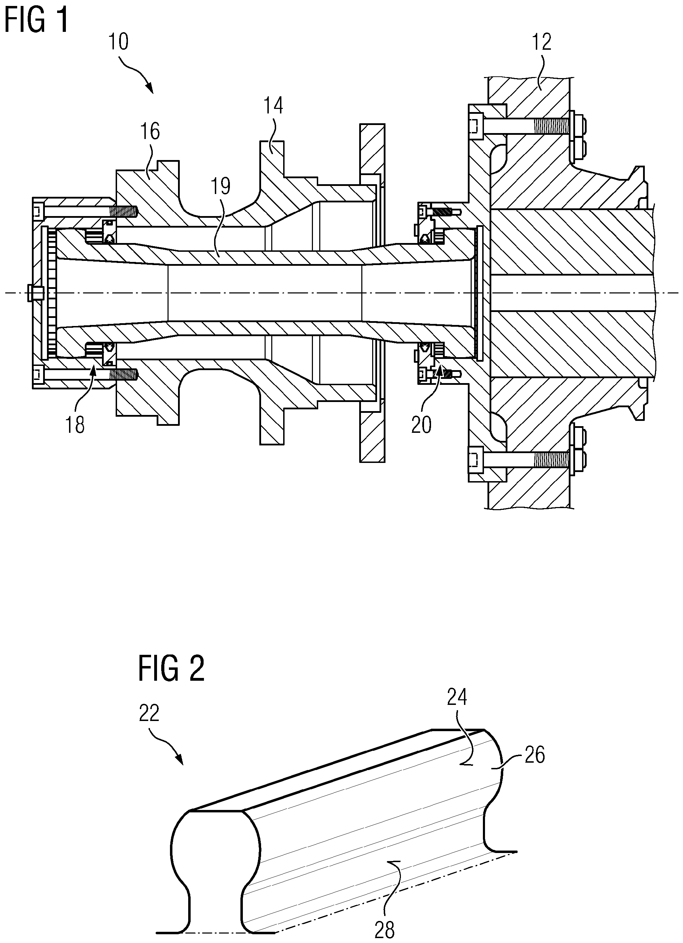

Die in Fig. 1 dargestellte Doppelgelenkkupplung 10 für ein Schienenfahrzeug kann eine auf einer Schiene abrollende Radnabe 12 mit einem höhenverstellbaren Wagon koppeln. In dem höhenverstellbaren Wagon kann ein Getriebe und/oder ein Antriebsmotor vorgesehen sein, wobei eine Antriebsleistung über eine Stirnradverzahnung in ein Außenzahnrad 14 eines Gehäuses 16 der Doppelgelenkkupplung 10 eingeleitet werden kann. Über eine als Bogenverzahnung ausgestaltete erste Zahnkupplung 18 kann die Antriebsleistung an eine verkippbare, insbesondere als durchgängige Hohlwelle ausgestaltete, Welle 19 übertragen werden, die über eine, insbesondere ebenfalls als Bogenverzahnung und/oder Keilpaketkupplung ausgestaltete, zweite Zahnkupplung 20 die Antriebsleistung an die Radnabe 12 überträgt. Die Stirnradverzahnung mit dem Außenzahnrad 14, die erste Zahnkupplung 18 und/oder die zweite Zahnkupplung 20 können feststoffgeschmiert ausgestaltet sein.

Ein in Fig. 2 exemplarisch dargestellter erster Zahn 22 kann Teil eines ersten Verzahnungspartners der feststoffgeschmierten Stirnradverzahnung mit dem Außenzahnrad 14, der erste Zahnkupplung 18 und/oder der zweite Zahnkupplung 20 sein und mit einem nicht dargestellten zweiten Zahn eines zweiten Verzahnungspartner zusammenwirken. Der zweite Zahn 22 weist zumindest in einer Abstützfläche 24, an der die Zähne aufeinandergepresst werden, ein Sintermaterial 26 auf. Vorzugsweise ist der gesamte erste Zahn 22 und/oder der gesamte erste Verzahnungspartner aus dem Sintermaterial 26 hergestellt, während der zweite Zahn und der zweite Verzahnungspartner aus einem duktileren Material, insbesondere Stahl, hergestellt ist, oder umgekehrt. Vorzugsweise ist zumindest die gesamte die gesamte den entsprechenden Zahn einschließende Mantelfläche 28 sowie insbesondere zusätzlich die Axialseiten des entsprechenden Verzahnungspartners durch das Sintermaterial 26 ausgebildet.

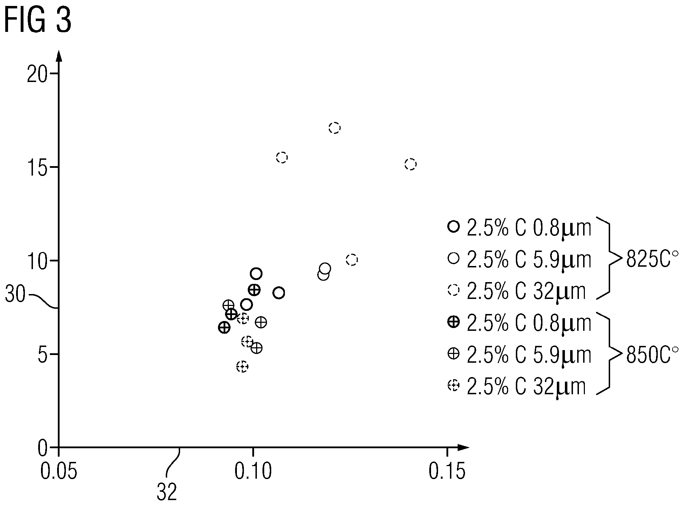

In Fig. 3 ist in einem Diagramm für verschiedene Sintermaterialen 26 eine Verschleißrate 30 in 10⁻⁶ mm³ N⁻¹ m⁻¹ über einen Reibungskoeffizienten 32 eingetragen. Bei den Versuchsbeispielen wurde für eine Pulvermischung zur Herstellung eines Grünkörpers, aus dem durch das Sintern das Sintermaterialen 26 entsteht, 9 Volumen-% MoS₂, 2,5 Volumen-% Graphit und Rest Fe verwendet, wobei für die jeweiligen Versuchsbeispiele nur die Partikelgröße des Graphits zwischen 32 µm, 5,9 µm und 0,8 µm und die Sintertemperatur zwischen 825°C und 850°C variiert wurde. Die Versuchsbeispiele mit einer Sintertemperatur von 850°C zeigen vergleichsweise gleich gute Ergebnisse mit einem Reibungskoeffizienten 32 von ca. 0,10 und einer Verschleißrate 30 von ca. 4 × 10⁻⁶ mm³ N⁻¹ m⁻¹ bis 9 × 10⁻⁶ mm³ N⁻¹ m⁻¹. Ein ähnlich gutes Ergebnis wird mit dem Versuchsbeispiele mit einer Sintertemperatur von 825°C und einer Partikelgröße von 5,9 µm erreicht, wobei die Versuchsbeispiele mit einer Sintertemperatur von 825°C und einer Partikelgröße von 0,8 µm und 32 µm bezüglich des Reibungskoeffizienten 32 und der Verschleißrate 30 schlechtere Werte zeigen und stärker gestreut sind. Eine optimale Sintertemperatur für die untersuchten Pulvermischung dürfte somit näher bei 850°C als bei 825°C liegen.

## Patentansprüche

1. Verzahnungsanordnung zur Lastübertragung, mit
einem ersten Zahn (22) zum Einleiten einer Last und
einem an dem ersten Zahn (22) an einer Abstützfläche (24) abstützbaren zweiten Zahn zum Ausleiten der Last,
wobei der erste Zahn (22) und/oder der zweite Zahn aus einem ölfreien, selbstschmierenden Sintermaterial (26) hergestellt ist,
wobei das Sintermaterial (26) eine offenporige Metallmatrix aufweist und in der Metallmatrix Festschmierstoffpartikel und Kohlenstoffpartikel dispergiert sind.

2. Verzahnungsanordnung nach Anspruch 1, wobei der erste Zahn (22) aus dem Sintermaterial (26) und der zweite Zahn aus einem Stahl oder der zweite Zahn aus dem Sintermaterial (26) und der erste Zahn (22) aus einem Stahl hergestellt ist.

3. Verzahnungsanordnung nach Anspruch 1 oder 2, wobei in einer Pulvermischung zur Herstellung eines Grünkörpers für das Sintermaterial (26) bezogen auf das Gesamtvolumen die Festschmierstoffpartikel einen Volumenanteil V_{F} von 7,5% ≤ V_{F} ≤ 10,5%, insbesondere V_{F} = 9% ± 0,2% und/oder die Kohlenstoffpartikel einen Volumenanteil Vc von 1,5% ≤ V_{C} ≤ 7,5%, insbesondere 2,0% ≤ V_{C} ≤ 5,0% und vorzugsweise Vc = 2,5% ± 0,1% aufweisen.

4. Verzahnungsanordnung nach einem der Ansprüche 1 bis 3, wobei in einer Pulvermischung zur Herstellung eines Grünkörpers für das Sintermaterial (26) die Kohlenstoffpartikel eine mittlere Partikelgröße x von 4,5 µm ≤ x ≤ 40 µm und insbesondere 5,5 µm ≤ x ≤ 35 µm aufweisen.

5. Verzahnungsanordnung nach einem der Ansprüche 1 bis 4, wobei das Sintermaterial (26) bei einer Sintertemperatur T von 775°C ≤ T ≤ 1 000°C, insbesondere 800°C ≤ T ≤ 900°C und vorzugsweise 825°C ≤ T ≤ 850°C hergestellt ist.

6. Verzahnungsanordnung nach einem der Ansprüche 1 bis 5, wobei die Festschmierstoffpartikel MoS₂ aufweisen oder ausschließlich aus MoS₂ bestehen.

7. Verzahnungsanordnung nach einem der Ansprüche 1 bis 6, wobei die Metallmatrix Eisen und/oder Eisenverbindungen und/oder Eisenlegierungen aufweist oder ausschließlich aus Eisen und/oder Eisenverbindungen und/oder Eisenlegierungen besteht.

8. Verwendung einer Verzahnungsanordnung nach einem der Ansprüche 1 bis 7 bei einer maximalen Flächenpressung pₘₐₓ in der Abstützfläche (24) von 400 N/mm² ≤ pₘₐₓ ≤ 900 N/mm², insbesondere 500 N/mm² ≤ pₘₐₓ ≤ 700 N/mm².

9. Verwendung nach Anspruch 8, wobei im regulären Normalbetrieb in der Abstützfläche (24) eine Flächenpressung p von 150 N/mm² ≤ p ≤ 400 N/mm², insbesondere p = 300 N/mm² ± 50 N/mm² vorherrscht.

10. Verwendung nach Anspruch 8 oder 9, wobei im regulären Normalbetrieb eine Temperatur T im Bereich der Abstützfläche (24) von 20°C ≤ T ≤ 80°C, vorzugsweise 23°C ≤ T ≤ 50°C und besonders bevorzugt 25°C ≤ T ≤ 30°C vorliegt.

11. Verfahren zur Herstellung einer Verzahnungsanordnung nach einem der Ansprüche 1 bis 7, bei dem
eine Pulvermischung zur Herstellung eines Grünkörpers bereitgestellt wird, wobei die Pulvermischung Metallpartikel, Festschmierstoffpartikel und Kohlenstoffpartikel aufweist,
der Grünkörper zur Ausbildung eines den ersten Zahn (22) oder den zweiten Zahn aufweisenden Verzahnungspartners ausgeformt wird, und
der Grünkörper bei einer Sintertemperatur T von 775°C < T ≤ 1 000°C, insbesondere 800°C ≤ T ≤ 900°C und vorzugsweise 825°C ≤ T ≤ 850°C gesintert wird, um das Sintermaterial (26) mit der offenporigen Metallmatrix, in der die Festschmierstoffpartikel und die Kohlenstoffpartikel dispergiert sind, auszubilden.

12. Getriebe, insbesondere für ein Schienenfahrzeug, mit einer Verzahnungsanordnung nach einem der Ansprüche 1 bis 7 zur Übertragung einer Getriebeleistung.

13. Getriebe nach Anspruch 11, wobei die Verzahnungsanordnung Teil einer Stirnradverzahnung ist und/oder die Verzahnungsanordnung Teil einer Planetenradverzahnung ist, wobei die Planetenradverzahnung ein Planetenrad eines Planetengetriebes und eine mit dem Planetenrad verzahntes Hohlrad ist.

14. Zahnkupplung (18, 20) zum Kuppeln einer Eingangswelle mit einer Ausgangswelle, mit einer Innenverzahnung und einer an der Innenverzahnung abgestützten Außenverzahnung, wobei zwischen der Innenverzahnung und der Außenverzahnung eine Verzahnungsanordnung nach einem der Ansprüche 1 bis 7 ausgebildet ist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Verzahnungsanordnung nach einem der Ansprüche 1 bis 7 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile der Verzahnungsanordnung, insbesondere durch 3D-Druck, durchzuführen
und/oder
bei einer Verarbeitung durch eine Datenverarbeitungseinrichtung zur Durchführung einer technischen Simulation eine Simulation der Funktionsweise der Verzahnungsanordnung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
